# EUROPÄISCHE PATENTSCHRIFT

(11) **EP 2 268 944 B1**
(45) Veröffentlichungstag und Bekanntmachung des Hinweises auf die Patenterteilung: **30.11.2011**
(21) Anmeldenummer: 09734505.2
(22) Anmeldetag: 15.04.2009
(51) Int. Cl.: F16H 59/70, F16H 63/32

(54) **SCHALTGABEL FÜR EIN KRAFTFAHRZEUGSCHALTGETRIEBE**
SHIFTING FORK FOR A MOTOR VEHICLE TRANSMISSION
FOURCHETTE DE SÉLECTION POUR UNE BOÎTE À COMMANDE MANUELLE DE VÉHICULE AUTOMOBILE

(30) Priorität: 22.04.2008 DE 102008020072
(43) Veröffentlichungstag der Anmeldung: 05.01.2011
(73) Patentinhaber: Selzer Fertigungstechnik GmbH & Co. KG, 35759 Driedorf-Roth (DE)
(72) Erfinder: SCHULZE, Andreas, 35759 Driedorf-Roth (DE)
(74) Vertreter: Oppermann, Mark
(86) Internationale Anmeldenummer: PCT/EP2009/002737
(87) Internationale Veröffentlichungsnummer: WO 2009/129952

(56) Entgegenhaltungen:
- EP-A- 1 637 779
- EP-A- 1 717 492
- DE-B3- 10 336 971

## Beschreibung

### TECHNISCHES GEBIET

Die Erfindung bezieht sich auf eine Schaltgabel für ein Kraftfahrzeugschaltgetriebe, mit einem daran befestigten Sensorarm einer Schaltgabelpositionserkennungseinrichtung, an dessem freien Ende ein Magnetträger befestigt ist, an welchem wenigstens ein Magnetkörper zu wenigstens einem Bezugspunkt der Schaltgabel lagegenau positioniert und befestigt ist.

Die Magnetkörperanordnung am Magnethalter dient als Sensorelement für die Positionsbestimmung der Schaltgabel in dem Schaltgetriebe. Dafür ist die Magnetkörperanordnung lagegenau zu bestimmten Bezugspunkten an der Schaltgabel, beispielsweise zu den Lagern der Schaltschiene, an der die Schaltgabel befestigt ist, und/oder zu den zum Eingriff mit der Umfangsnut einer Schaltmuffe bestimmten Gleitschuhen, an dem Sensorarm innerhalb enger Maßtoleranzen auszurichten und verliersicher zu befestigen.

### STAND DER TECHNIK

Aus EP 1 637 779 A1 ist eine Schaltgabel der eingangs angegebenen Ausbildung bekannt, bei welcher der wenigstens eine Magnetkörper in den Innenraum einer formstabilen Kappe aus unmagnetisierbarem Material kraft- und/oder formschlüssig und relativ zur Kappe lagegenau aufgenommen ist, wobei die Kappe über an ihr und/oder am Magnetträger vorgesehene Verbindungselemente kraft- und/oder formschlüssig und lagegenau mit dem Magnetträger verbunden, vorzugsweise verrastet ist.

Bei dieser bekannten Schaltgabel kann die die Magnetkörper aufnehmende und am Magnetträger zu befestigende Kappe abfal len, insbesondere wenn sie nicht richtig mit dem Magnetträger verbunden bzw. verrastet wurde. Außerdem können sich dabei Magnetkörper vom Magnetträger lösen und ebenfalls in das Getriebe fallen. Dadurch wird die Schaltgabelpositionserkennungseinrichtung unbrauchbar. Falls ein solcher unerwünschter Fall im Betrieb des Kraftfahrzeugs auftritt, fällt das Kraftfahrzeug für die Dauer der Reparatur, bei welcher das Getriebe zu öffnen ist, aus.

### AUFGABENSTELLUNG

Der Erfindung liegt die Aufgabe zugrunde, eine Schaltgabel der eingangs angegebenen Ausbildung bereitzustellen, bei der die feste lagegenaue Verbindung der miteinander zu verbindenden an der Schaltgabel angebrachten Teile der Schaltgabelpositionserkennungseinrichtung auf einfache, prozeßsichere und dauerhafte Weise erfolgt.

### DARSTELLUNG DER ERFINDUNG

Die gestellte Aufgabe wird erfindungsgemäß durch die im Patentanspruch 1 angegebenen Merkmale gelöst. Vorteilhafte oder zweckmäßige Weiterbildungen der Erfindung sind in den Unteransprüchen angegeben und nachfolgend ebenfalls beschrieben.

Erfindungsgemäß wird eine Schaltgabel der eingangs angegebenen Ausbildung vorgeschlagen, bei welcher vorgesehen ist, daß wenigstens zwei Teile der aus dem Sensorarm, dem Magnetträger und dem wenigstens einen Magnetkörper bestehenden Baugruppe miteinander durch einen beide Teile umhüllend aufgeschrumpften Schrumpfschlauchabschnitt fest miteinander verbunden sind.

Auf diese Weise wird durch einfaches Aufschieben eines entsprechend im Durchmesser dimensionierten Schrumpfschlauchabschnitts auf die beiden lagegenau ausgerichteten Teile und anschließende Wärmeeinwirkung auf den Schrumpfschlauchabschnitt eine feste verliersichere Verbindung beider Teile erzielt, ohne daß zusätzliche Verbindungs- oder Verriegelungsmittel vorzusehen sind. Der aus einem geeigneten Material bestehende Schrumpfschlauchabschnitt umhüllt und überspannt die Außenkonturen der beiden fest zu verbindenden Teile im engen Formschluß.

Vorzugsweise sind die wenigstens zwei fest zu verbindenden Teile der Baugruppe entsprechend Anspruch 2 lagegenau positioniert durch einen geeigneten Kleber miteinander verklebt, wobei ihre gegenseitige Position durch den aufgeschrumpften Schrumpfschlauchabschnitt unverlierbar fixiert ist. Selbst wenn die Klebestelle nach dem Aufschrumpfvorgang versagen sollte, d.h. der Kleber seine Klebewirkung verlieren sollte, was durch Auswahl eines geeigneten Klebers vermeidbar ist, wird die lagegenaue Positionierung und Befestigung der beiden Teile aneinander durch den aufgeschrumpften Schrumpfschlauchabschnitt sichergestellt.

In einer Ausführungsform der Erfindung sind entsprechend Anspruch 3 die wenigstens zwei fest miteinander zu verbindenden Teile der Baugruppe ein Magnetkörper und der Magnetträger, auf die der Schrumpfschlauchabschnitt von einem Ende des Magnetträgers her aufgeschoben und aufgeschrumpft ist. Vorzugsweise sind gemäß Anspruch 4 zwei voneinander beabstandete Magnetkörper an dem Magnetträger durch jeweils einen aufgeschrumpften Schrumpfschlauchabschnitt befestigt, wobei die beiden Schrumpfschlauchabschnitte jeweils von einem Ende des Magnetträgers her aufgeschoben sind.

Wie im Anspruch 5 angegeben, kann aber auch in einer weiteren Ausführungsform gegebenenfalls zusätzlich vorgesehen sein, daß die wenigstens zwei fest miteinander zu verbindenden Teile der Baugruppe der Magnetträger und ein von dem Sensorarm abgewinkelter Befestigungsschenkel sind, die lagegenau positioniert flächig aneinanderliegend durch einen auf beide Teile aufgeschobenen und aufgeschrumpften Schrumpfschlauchabschnitt fest und unverlierbar miteinander verbunden sind.

Hierbei kann der Schrumpfschlauchabschnitt sowohl auf den abgewinkelten Befestigungsschenkel des Sensorarms und den Magnetträger als auch auf einen dem abgewinkelten Befestigungsschenkel benachbarten Magnetkörper aufgeschoben und aufgeschrumpft sein, wie im Anspruch 6 angegeben ist.

Bei allen Ausführungsformen der Erfindung kann entsprechend Anspruch 7 vorgesehen sein, daß der Magnetträger an den Stellen der aufgeschrumpften Schrumpfschlauchabschnitte mit Randkerben und/oder Randvorsprüngen versehen ist. Diese Randkerben und/oder Randvorsprünge verstärken noch die formschlüssige Verklammerung der wenigstens zwei fest miteinander zu verbindenden Teile der Baugruppe durch den Schrumpfschlauchabschnitt bzw. die Schrumpfschlauchabschnitte.

### KURZE BESCHREIBUNG DER ZEICHNUNGEN

Weitere Einzelheiten der Erfindung werden nachfolgend anhand der Ausführungsbeispiele darstellenden zum Teil schematischen Zeichnungen näher erläutert. Darin zeigt:
- Fig. 1: in einer perspektivischen Darstellung eine Schaltgabel mit daran befestigtem Sensorarm und einem daran angebrachten Magnetträger, der mit zwei Magnetkörpern bestückt ist, die jeweils durch einen aufgeschrumpften Schrumpfschlauchabschnitt unverlierbar an dem Magnetträger befestigt sind,
- Fig. 2: in abgebrochener perspektivischer Darstellung einen Sensorarm mit daran befestigtem Magnetträger, an welchem zwei Magnetkörper angebracht sind, noch ohne aufgeschrumpfte Schrumpfschlauchabschnitte,
- Fig. 3: die Draufsicht auf die in Fig. 2 gezeigte Anordnung,
- Fig. 4: in abgebrochener perspektivischer Darstellung die Anordnung gemäß Fig. 2, jedoch mit aufgeschrumpften Schrumpfschlauchabschnitten,
- Fig. 5: die Draufsicht auf die in Fig. 4 gezeigte Anordnung,
- Fig. 6: den abgebrochenen Schnitt entlang der Schnittverlaufslinie VI-VI in Fig. 5,
- Fig. 7: in abgebrochener perspektivischer Darstellung einen Magnetträger mit zwei Magnetkörpern und dem Sensorarm, der über einen abgewinkelten Befestigungsschenkel mittels eines Schrumpfschlauchabschnitts fest und unverlierbar mit dem Magnetträger verbunden ist,
- Fig. 8: die Draufsicht auf die in Fig. 7 gezeigte Anordnung,
- Fig. 9: den abgebrochenen Schnitt entlang der Schnittverlaufslinie IX-IX in Fig. 8,
- Fig. 10: in abgebrochener perspektivischer Darstellung einen der Fig. 2 ähnlichen Magnetträger, an welchem zwei Magnetkörper angebracht sind, jedoch mit einem Sensorarm, der entsprechend der Fig. 7 bis 9 ausgebildet und zur Befestigung an dem Magnetträger vorgesehen ist,
- Fig. 11: die Draufsicht auf die in Fig. 10 gezeigte Anordnung,
- Fig. 12: eine abgebrochene Seitenansicht der in den Fig. 10 und 11 gezeigten Anordnung,
- Fig. 13: in abgebrochener perspektivischer Darstellung die Anordnung gemäß Fig. 10, jedoch mit aufgeschrumpften Schrumpfschlauchabschnitten,
- Fig. 14: die Draufsicht auf die in Fig. 13 gezeigte Anordnung und
- Fig. 15: den abgebrochenen Schnitt entlang der Schnittverlaufslinie XV-XV in Fig. 14.

### DETAILLIERTE BESCHREIBUNG DER AUSFÜHRUNGSBEISPIELE

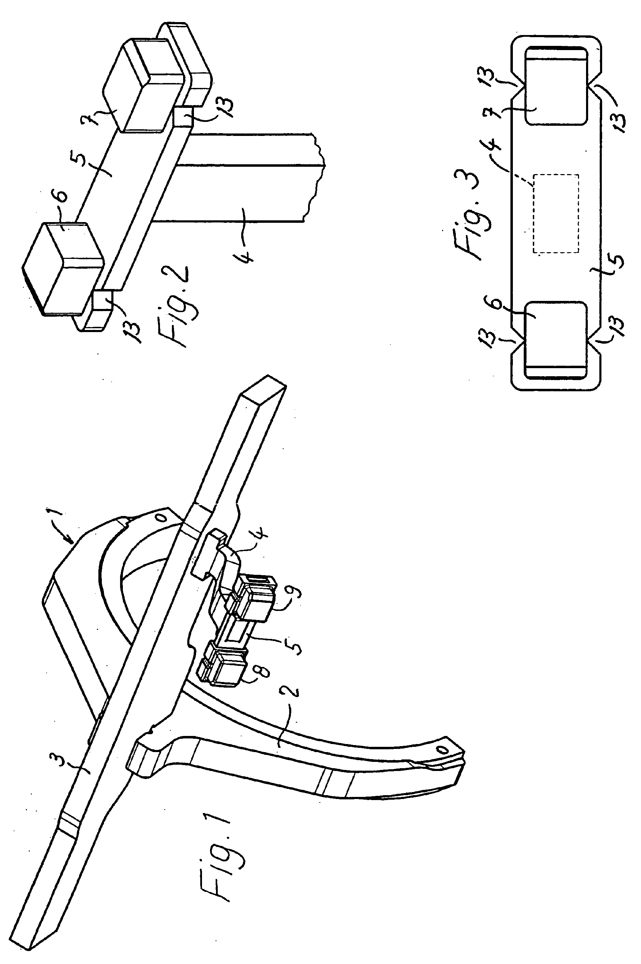

Die in Fig. 1 dargestellte Schaltgabel 1 besteht aus einem Gabelkörper 2, einem daran befestigten Schienen- und Führungsteil 3 und einem am Gabelkörper 2 befestigten Sensorarm 4. An den Enden des Schienen- und Führungsteils 3 sind Lager zu befestigen (nicht dargestellt). An den beiden Enden des Gabelkörpers 2 sind Gleitschuhe (nicht dargestellt) anzubringen, die zum Eingriff mit der Umfangsnut einer Schaltmuffe (nicht dargestellt) bestimmt sind. Im Ausführungsbeispiel sind der Gabelkörper 2, das Schienen- oder Führungsteil 3 und der Sensorarm 4 aus Stahlblech bestehende Feinschneidteile, die beispielsweise durch Nietung fest miteinander verbunden sind.

An dem Sensorarm 4 ist ein Magnetträger 5 angebracht, der ebenfalls als ein aus Stahlblech bestehendes Feinschneidteil ist, das mit dem freien Ende des Sensorarms in den Ausführungsbeispielen gemäß der Fig. 1 bis 3 und 4 bis 6 durch Schweißung oder Nietung fest verbunden ist. An dem Magnetträger 5 befinden sich bei allen Ausführungsbeispielen zwei voneinander beabstandete Magnetkörper 6 und 7, die auf noch zu beschreibende Weise mit dem Magnetträger 5 lagegenau positioniert fest verbunden sind und im Zusammenwirken mit einem am Getriebegehäuse (nicht dargestellt) ortsfest anzubringenden Sensor (nicht dargestellt) der Positionsbestimmung der Schaltgabel 1 in dem Schaltgetriebe dienen.

Bei allen Ausführungsbeispielen sind die etwa quaderförmig geformten Magnetkörper 6 und 7 in flächiger Anlage mit dem Magnetträger 5 verklebt. Als Kleber eignen sich beispielsweise solche auf Basis von Urethanmethacrylaten, die anaerob/wärmeaushärtend sind. Gute Ergebnisse wurden mit dem Kleber LOCTITE 661 (Markenname der Firma Loctite Corp., USA) erzielt. Die Aushärtung des Klebers unter UV-Licht erfolgt in wenigen Sekunden, so daß die Magnetkörper 6, 7 schnell am Magnetträger 5 lagegenau positioniert fixiert sind.

Die nachhaltige Befestigung der beiden Magnetkörper 6, 7 am Magnetträger 5 erfolgt bei den Ausführungsbeispielen gemäß der Fig. 1 bis 3 und 4 bis 6 durch zwei in den Abmessungen übereinstimmende Schrumpfschlauchabschnitte 8 und 9, die jeweils von den Enden des Magnetträgers 5 her auf die Magnetkörper 6, 7 und die jeweiligen Endbereiche des Magnetträgers 5 aufgeschoben und durch Wärmeeinwirkung aufgeschrumpft sind. Beim Aufschrumpfvorgang werden die umhüllten Kanten an den Magnetkörpern 6, 7 und an den betreffenden Bereichen des Magnetträgers 5 fest überspannt, wie das in den Zeichnungen angedeutet ist, wodurch die Magnetkörper 6 und 7 in den lagegenau ausgerichteten Positionen unverlierbar am Magnetträger befestigt sind.

Geeignet sind Schrumpfschläuche, die den im Getriebebetrieb auftretenden Temperaturen bis zu maximal +150 °C standhalten. Beispielsweise können Schrumpfschläuche aus PTFE/Teflon (Markenname der Firma DuPont, USA) eingesetzt werden, die einer Dauertemperatur ohne Formänderungen zwischen -65 °C und +260 °C standhalten, bei Erwärmungen über +327 °C schrumpfen und eine Schrumpfrate von etwa 2:1 oder sogar 4:1 aufweisen.

Wegen der hohen Schrumpfrate sind die Durchmesser der Schrumpfschlauchabschnitte bezüglich der Querschnittsabmessungen aus Magnetkörper 6, 7 und Magnetträger 5 von etwa 8 mm Breite und etwa 6 mm Höhe nicht kritisch. Ein leicht und mit Spiel auf diesen Querschnitt aufschiebbarer Schrumpfschlauch kann etwa 10 mm Durchmesser aufweisen. Die Länge der Schrumpfschlauchabschnitte 8 und 9 ist so vorzusehen, daß sie größer ist als die Länge der Magnetkörper 6, 7, so daß auch die bezüglich der Hauptachse des Magnetträgers 5 querverlaufenden Außenkanten der Magnetkörper gut von den aufgeschrumpften Schrumpfschlauchabschnitten 8, 9 überspannt werden.

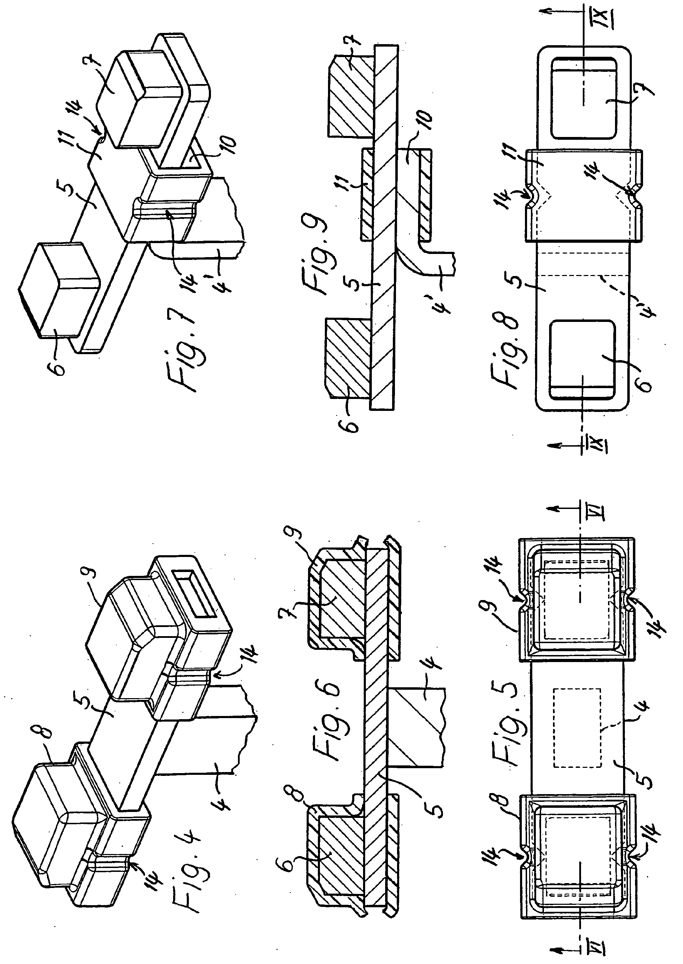

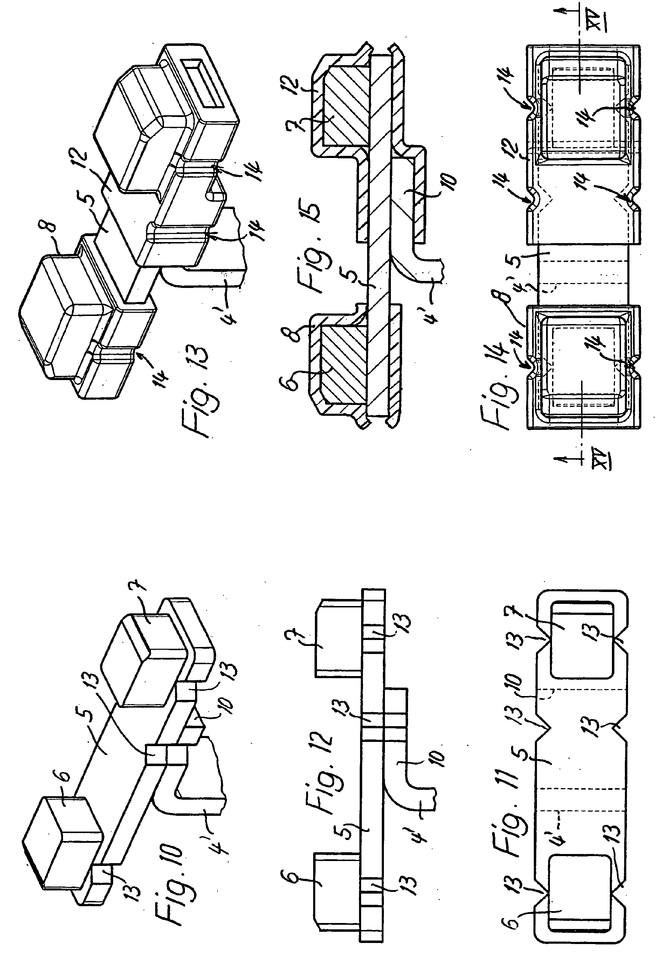

Bei dem in den Fig. 7 bis 9 dargestellten Ausführungsbeispiel besitzt der Sensorarm 4' einen rechtwinklig abgebogenen Befestigungsschenkel 10, welcher der den Magnetkörpern 6, 7 abgewandten Seite des Magnetträgers 5 lagegenau positioniert flächig anliegt und an dieser beispielsweise durch Kleben befestigt ist. Ein Schrumpfschlauchabschnitt 11 ist über den Magnetkörper 7 hinweg auf den Magnetträger 5 und den Befestigungsschenkel 10 aufgeschoben und dort aufgeschrumpft, wodurch eine nachhaltige unverlierbare Befestigung des Magnetträgers 5 am Sensorarm 4' sichergestellt ist. Die Magnetkörper 6, 7 können wir zuvor beschrieben an dem Magnetträger 5 befestigt sein. Das in den Fig. 13 bis 15 dargestellte Ausführungsbeispiel zeigt einen Schrumpfschlauchabschnitt 12 für die Befestigung des Magnetkörpers 7, dessen Länge so gewählt ist, daß er sowohl auf den abgewinkelten Befestigungsschenkel 10 als auch auf den benachbarten Magnetkörper 7 aufgeschoben und aufgeschrumpft ist, wodurch zugleich der Sensorarm 4' und der Magnetkörper 7 am Magnetträger 5 unverlierbar und lagegenau positioniert dauerhaft befestigt sind.

Wie insbesondere die Fig. 2, 3 und 11 bis 12 verdeutlichen, ist der Magnetträger 5 an den Stellen der aufgeschrumpften bzw. aufzuschrumpfenden Schrumpfschlauchabschnitte 8, 9, 11 und 12 mit Randkerben 13 in Form dreieckiger Ausnehmungen versehen, in welche Schrumpfschlauchmaterial beim Schrumpfvorgang eintritt, so daß zusätzliche Verklammerungen der Schrumpfschlauchabschnitte mit dem Magnetträger 5 erzielt werden, die jegliches Verschieben der Schrumpfschlauchabschnitte und der von diesen festgelegten Magnetkörper 5, 6 an dem Magnetträger 5 ausschließen. Die Fig. 1, 4, 5, 7 und 8 veranschaulichen den Eintritt von Schrumpfschlauchmaterial in die Randkerben 13 an den mit der Bezugszahl 14 bezeichneten Stellen.

Es wird eine Schaltgabel 1 für ein Kraftfahrzeuggetriebe vorgeschlagen, an welcher ein Sensorarm 4,4' einer Schaltgabelpositionserkennungseinrichtung befestigt ist. Am freien Ende des Sensorarms 4, 4' ist ein Magnetträger 5 befestigt, an welchem wenigstens ein Magnetkörper, vorzugsweise zwei voneinander beabstandete Magnetkörper 6, 7, zu wenigstens einem Bezugspunkt an der Schaltgabel 1 lagegenau positioniert befestigt ist bzw. sind. Hierbei sind wenigstens zwei Teile der aus dem Sensorarm 4, 4', dem Magnetträger 5 und dem wenigstens einen Magnetkörper 6, 7 bestehenden Baugruppe miteinander durch einen diese beiden Teile umhüllend aufgeschrumpften Schrumpfschlauchabschnitt 8, 9, 11, 12 fest und dauerhaft miteinander verbunden.

### BEZUGSZAHLENLISTE

- 1: Schaltgabel
- 2: Gabelkörper
- 3: Schienen- und Führungsteil
- 4, 4': Sensorarm
- 5: Magnetträger
- 6: Magnetkörper
- 7: Magnetkörper
- 8: Schrumpfschlauchabschnitt
- 9: Schrumpfschlauchabschnitt
- 10: Befestigungsschenkel
- 11: Schrumpfschlauchabschnitt
- 12: Schrumpfschlauchabschnitt
- 13: Randkerben
- 14: Eintrittsstellen

## Patentansprüche

1. Schaltgabel (1) für ein Kraftfahrzeugschaltgetriebe, mit einem daran befestigten Sensorarm (4; 4') einer Schaltgabelpositionserkennungseinrichtung, an dessem freien Ende ein Magnetträger (5) befestigt ist, an welchem wenigstens ein Magnetkörper (6, 7) zu wenigstens einem Bezugspunkt der Schaltgabel (1) lagegenau positioniert und befestigt ist, **dadurch gekennzeichnet, daß** wenigstens zwei Teile der aus dem Sensorarm (4;4') , dem Magnetträger (5) und dem wenigstens einen Magnetkörper (6, 7) bestehenden Baugruppe miteinander durch einen beide Teile umhüllend aufgeschrumpften Schrumpfschlauchabschnitt (8, 9, 11, 12) fest miteinander verbunden sind.

2. Schaltgabel nach Anspruch 1, **dadurch gekennzeichnet, daß** die wenigstens zwei fest zu verbindenden Teile der Baugruppe (4; 4', 5, 6, 7) lagegenau positioniert miteinander verklebt sind und ihre gegenseitige Position durch den aufgeschrumpften Schrumpfschlauchabschnitt (8, 9, 11, 12) unverlierbar fixiert ist.

3. Schaltgabel nach Anspruch 1 oder 2, **dadurch gekennzeichnet, daß** die wenigstens zwei fest zu verbindenden Teile der Baugruppe ein Magnetkörper (6 oder 7) und der Magnetträger (5) sind, auf die der Schrumpfschlauchabschnitt (8 bzw. 9) von einem Ende des Magnetträgers (5) her aufgeschoben und aufgeschrumpft ist.

4. Schaltgabel nach einem der Ansprüche 1 bis 3, **dadurch gekennzeichnet, daß** zwei voneinander beabstandete Magnetkörper (6, 7) an dem Magnetträger (5) durch jeweils einen aufgeschrumpften Schrumpfschlauchabschnitt (8, 9) befestigt sind, wobei die beiden Schrumpfschlauchabschnitte (8, 9) jeweils von einem Ende des Magnetträgers (5) aufgeschoben sind.

5. Schaltgabel nach Anspruch 1 oder 2, **dadurch gekennzeichnet, daß** die wenigstens zwei fest miteinander zu verbindenden Teile der Baugruppe der Magnetträger (5) und ein von dem Sensorarm (4') abgewinkelter Befestigungsschenkel (10) sind, die lagegenau positioniert flächig aneinanderliegend durch einen auf beide Teile aufgeschobenen und aufgeschrumpften Schrumpfschlauchabschnitt (11) fest und unverlierbar miteinander verbunden sind.

6. Schaltgabel nach Anspruch 5, **dadurch gekennzeichnet, daß** der Schrumpfschlauchabschnitt (12) sowohl auf den abgewinkelten Befestigungsschenkel (10) des Sensorarms (4') und den Magnetträger (5) als auch auf einen dem abgewinkelten Befestigungsschenkel (10) benachbarten Magnetkörper (7) aufgeschoben und aufgeschrumpft ist.

7. Schaltgabel nach einem der Ansprüche 1 bis 6, **dadurch gekennzeichnet, daß** der Magnetträger (5) an den Stellen der aufgeschrumpften Schrumpfschlauchabschnitte (8, 9, 11, 12) mit Randkerben (13) und/oder mit Randvorsprüngen versehen ist.

## Claims

1. Selector fork (1) for a motor vehicle shift transmission, comprising a sensor arm (4; 4'), which is fastened thereto, of a selector fork position recognition device, to the free end of which a magnet carrier (5) is fastened, at which at least one magnet body (6, 7) is positioned accurately in position with respect to at least one reference point of the selector fork (1) and fastened, **characterized in that** at least two parts of the subassembly consisting of the sensor arm (4; 4'), the magnet carrier (5) and the at least one magnet body (6, 7) are fixedly connected together by a shrink sleeve section (8, 9, 11, 12) shrunk onto and enclosing the two parts.

2. Selector fork according to claim 1, **characterized in that** the at least two parts, which are to be fixedly connected, of the subassembly (4; 4', 5, 6, 7) are glued together to be positioned accurately in position and their mutual position is non-releasably fixed by the shrunk-on shrink sleeve section (8, 9, 11, 12).

3. Selector fork according to claim 1 or 2, **characterized in that** the at least two parts, which are to be fixedly connected, of the subassembly are a magnet body (6 or 7) and the magnet carrier (5), onto which the shrink sleeve section (8 or 9) is pushed from one end of the magnet carrier (5) and is shrunk on.

4. Selector fork according to any one of claims 1 to 3, **characterized in that** two mutually spaced-apart magnet bodies (6, 7) are fastened to the magnet carrier (5) by a respective shrunk-on shrink sleeve section (8, 9), wherein the two shrink sleeve sections (8, 9) are each pushed on from a respective end of the magnet carrier (5).

5. Selector fork according to claim 1 or 2, **characterized in that** the at least two parts, which are to be fixedly connected together, of the subassembly are the magnet carrier (5) and a fastening limb (10) bent over from the sensor arm (4'), which parts are fixedly and non-releasably connected together positioned accurately in position and lying flatly one against the other by a shrink sleeve section (11) pushed onto both parts and shrunk on.

6. Selector fork according to claim 5, **characterized in that** the shrink sleeve section (12) is pushed onto and shrunk on not only the bent-over fastening limb (10) of the sensor arm (4') and the magnet carrier (5), but also onto and on a magnet body (7) adjacent to the bent-over fastening limb (10).

7. Selector fork according to any one of claims 1 to 6, **characterized in that** the magnet carrier (5) is provided at the positions of the shrunk-on shrink sleeve sections (8, 9, 11, 12) with edge notches (13) and/or with edge projections.

## Revendications

1. Fourchette de commande (1) pour une boite de vitesses à changement de vitesses de véhicule automobile, sur laquelle est fixé un bras de capteur (4; 4') d'un dispositif de détection de position de fourchette de commande, à l'extrémité libre duquel est fixé un support d'aimant (5) sur lequel est fixé et positionné de manière précise par rapport à au moins un point de référence de la fourchette de commande (1), un corps d'aimant (6, 7), **caractérisée en ce qu'**au moins deux pièces du sous-groupe formé par le bras de capteur (4; 4'), le support d'aimant (5) et ledit au moins un corps d'aimant (6, 7), sont reliées de manière fixe l'une à l'autre par un tronçon de gaine rétractable (8, 9, 11, 12) engagé et rétracté sur les deux pièces en les enveloppant.

2. Fourchette de commande selon la revendication 1, **caractérisée en ce que** lesdites au moins deux pièces du sous-groupe (4; 4', 5, 6, 7), à relier de manière fixe, sont collées l'une à l'autre en étant positionnées de manière précise l'une par rapport à l'autre, et leur position réciproque est fixée de manière imperdable par le tronçon de gaine rétractable (8, 9, 11, 12), qui a été engagé par-dessus et rétracté.

3. Fourchette de commande selon la revendication 1 ou la revendication 2, **caractérisée en ce que** lesdites au moins deux pièces du sous-groupe, à relier de manière fixe, sont un corps d'aimant (6 ou 7) et le support d'aimant (5) sur lesquels est engagé le tronçon de gaine rétractable (8 respectivement 9), à partir d'une extrémité du support d'aimant (5), en y étant rétracté.

4. Fourchette de commande selon l'une des revendications 1 à 3, **caractérisée en ce que** deux corps d'aimant (6, 7) espacés l'un de l'autre sont fixés sur le support d'aimant (5), chacun par un tronçon de gaine rétractable (8, 9) engagé et rétracté sur eux, les deux tronçons de gaine rétractable (8, 9) étant engagés chacun respectivement à partir d'une extrémité du support d'aimant (5).

5. Fourchette de commande selon la revendication 1 ou la revendication 2, **caractérisée en ce que** lesdites au moins deux pièces du sous-groupe, à relier de manière fixe, sont le support d'aimant (5) et une branche de fixation (10) coudée du bras de capteur (4'), qui sont reliés de manière fixe et imperdable, en étant positionnés de manière précise l'un par rapport à l'autre et appliqués l'un contre l'autre par contact de surface, au moyen d'un tronçon de gaine rétractable (11) engagé sur les deux pièces et rétracté.

6. Fourchette de commande selon la revendication 5, **caractérisée en ce que** le tronçon de gaine rétractable (12) est engagé et rétracté aussi bien sur la branche de fixation (10) coudée du bras de capteur (4') et le support d'aimant (5), que sur un corps d'aimant (7) voisin de la branche de fixation (10) coudée.

7. Fourchette de commande selon l'une des revendications 1 à 6, **caractérisée en ce que** le support d'aimant (5) est pourvu d'entailles de bordure (13) et/ou de protubérances de bordure, aux endroits où ont été engagés et rétractés les tronçons de gaine rétractable (8, 9, 11, 12).
